(19) Europäisches Patentamt
European Patent Office
Office européen des brevets

(11) **EP 3 910 801 B1**

(12) **EUROPEAN PATENT SPECIFICATION**

(45) Date of publication and mention
of the grant of the patent:
**11.01.2023 Bulletin 2023/02**

(51) International Patent Classification (IPC):
*H04B 3/32* (2006.01)   *H04B 3/54* (2006.01)
*H04Q 9/00* (2006.01)   *H04L 27/26* (2006.01)

(21) Application number: **20174082.6**

(52) Cooperative Patent Classification (CPC):
**H04B 3/32; H04B 3/54; H04Q 9/00;**
H04B 2203/5425; H04B 2203/5458;
H04B 2203/547; H04L 27/2601

(22) Date of filing: **12.05.2020**

(54) **DATA TRANSMISSION METHODS AND MOTOR ARRANGEMENTS**

DATENÜBERTRAGUNGSVERFAHREN UND MOTORANORDNUNGEN

PROCÉDÉS DE TRANSMISSION DE DONNÉES ET AGENCEMENTS DE MOTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.11.2021 Bulletin 2021/46**

(73) Proprietor: **SICK AG
79183 Waldkirch (DE)**

(72) Inventor: **Francescon, Massimo
10132 Turin (IT)**

(74) Representative: **Manitz Finsterwald
Patent- und Rechtsanwaltspartnerschaft mbB
Martin-Greif-Strasse 1
80336 München (DE)**

(56) References cited:
JP-A- 2012 178 758    US-A1- 2002 043 964
US-A1- 2016 251 956    US-A1- 2017 194 784
US-B1- 10 454 267    US-B2- 10 304 590

## Description

The present disclosure relates to data transmission methods and motor arrangements.

Driving electric motors may not only require motor power connections to be provided to the electric motor, but may also involve sensor data (for example measurement data or sensor configuration data) to be provided from and to a sensor mounted at the motor side.

US 2016/251956 A1 discloses a system which can include a first electric submersible pump that includes an electric motor with a wye point and a sensor unit coupled to the wye point; a second electric submersible pump that includes an electric motor with a wye point and a sensor unit coupled ot the wye point; a multiphase power cable operatively coupled to the electric motor of the first electric submersible pump and operatively coupled to the electric motor of the second electric submersible pump; and communication circuitry that includes a choke operatively coupled to the multiphase power cable that receives signals transmitted by the sensor unit of the first electric submersible pump and that receives signals transmitted by the sensor unit of the second electric submersible pump.

US 10 454 267 B1 discloses a load protection system and a method of protecting a load. The load protection system includes a PLC transmitter and a PLC receiver, which are configured to communicate a plurality of bits of data, each bit transmitted near a zero-crossing of a voltage on the power lines supplying power to the load, in the form of a high frequency burst of pulses. The pulses are structured in two patterns. The first pattern serves to identify the start of the second pattern, and the second pattern includes the data. The first pattern is unique and not represented within the second pattern. The load may be a motor, and the data may include a parameter value representing a parameter of the motor. A motor controller may evaluate the parameter value to determine whether to institute a warning or alert action, to shut the motor down, or to continue operating.

US 2017/194784 A1 discloses a ground fault immune power and data delivery system for downhole sensors which is connected to a downhole motor via a three-phase power cable. An AC power supply and sensor data module are electrically connected to one of two conductors (phases) at a time selected from the three conductors (phases) to provide power and data signals to the downhole sensors. If a ground fault is detected on one of the two connected phases, an isolation module isolates the grounded phase and switches to the ungrounded connected phase to continue transmitting power and data signals. A frequency of AC power supply, data communication frequencies and a switching frequency of a drive controlling the downhole motor are orthogonal to each other in order to mitigate interference. Surface-to-downhole communication can occur by adjusting voltage, frequency and/or phase of AC power supply controlled by a processor.

US 2002/043964 A1 discloses a power supply line which is wired in a loop from a battery power supply, and a power supply relay circuit which is installed intermediately of the power supply line such that power is supplied from the power supply relay circuit to an electric load connected to a terminal unit of an intensive wiring line.

JP 2012 178758 A discloses a device which includes a master module and at least one slave module controlled by the master module, and uses a power line supplying voltage to the master module and the slave module as a signal transmission line. The slave module includes a module-use CPU, a modulation/demodulation unit including a local oscillator, and a motor driver for controlling a stepping motor. There is provided a data transmission method in which, in the device, an oscillation frequency of the local oscillator is set so that the frequency band of a communication signal modulated by the modulation/demodulation unit is higher than the frequency band of motor noise derived from the stepping motor.

US 10 304 590 B2 discloses a cable waterproof structure which includes a plurality of insulated wires and a sheath covering the plurality of insulated wires collectively, a heat shrinkable tube with adhesive that includes adhesive inside, and which is provided and shrunk so as to cover an end of the sheath and a circumference of the plurality of insulated wires extended from the end of the sheath, and a fixing heat shrinkable tube that includes no adhesive inside, and is provided and shrunk so as to cover a part of the heat shrinkable tube with adhesive that covers the sheath and a circumference of the sheath extended from the heat shrinkable tube with adhesive, wherein a shrinkage start temperature of the fixing heat shrinkable tube is higher than a shrinkage start temperature of the heat shrinkable tube with adhesive.

Several digital interfaces have been developed in the last decades for the particular application of motor feedback. For example Hiperface-DSL® led the way to the so called "single cable solution" with the integration of the lines for the sensor data inside the power cable.

All conventional single cable solutions rely on baseband communication, wherein the physical signal is swinging between two levels associated with two binary states. While baseband communication handling is very simple both in the analog and digital domain, it may only provide a limited exploitation of the transmitting media and low robustness against noise.

Accordingly, there is a need for a more efficient and reliable communication between a motor controller side and a motor side, involving transmission of both the motor power connections and the sensor data.

The invention is set out in the appended set of claims. Examples which do not fall under the scope of these claims are provided for illustration purposes.

The present disclosure provides a data transmission method and a motor arrangement according to the independent claims. Embodiments are given in the subclaims, the description and the drawings.

In one aspect, the present disclosure is directed at a data transmission method comprising: providing a motor power supply via at least one first line to a motor; determining sensor data related to the motor; determining a sensor signal based on the sensor data using a plurality of carrier frequencies; and transmitting or receiving the sensor signal via at least one second line provided in a common cable jacket with the at least one first line.

In other words, a motor power supply may be provided via a single cable (i.e. a cable provided in a single cable jacket) together with sensor signals, wherein the sensor signals are obtained from sensor data (for example sensor measurement data from a sensor or sensor configuration data for a sensor) using a plurality of carrier frequencies. The motor power supply may be similar or identical to an "on/off" signal for driving the motor; for example, the motor power supply may be trapezoidal wave with an amplitude of 600 V and slew rate up to 10 kV/µs. The motor arrangement may withstand such high slew rates, i.e. data transmission on the at least one second line may not be seriously affected by the motor power supply on the at least one first line, since a plurality of carrier frequencies are used, which may reduce the effect of possible crosstalk between the at least one first line and the at least one second line.

Even if strong crosstalk between the motor cable(s) (i.e. the at least one first line) and the data line (i.e. at least one second line) is present, the physical layer as well as the protocol (using the plurality of carrier frequencies, which may entail an increased bandwidth) of the at least one second line according to various embodiments are robust in order to engage a reliable communication (for example between a control unit and a sensor mounted at the motor side), which may allow high throughput, short latency and accurate measurement, for example as required by the Industry 4.0 approach. With the increased bandwidth, some of the bandwidth may be used for redundancy and this may increase the robustness. A further source of robustness may be provided by avoiding frequencies in the lower spectrum portion, which may be obtained generically by a modulation with a single carrier (or single carrier frequency) or a plurality of carriers (or carrier frequencies), and exploiting a high-pass PHY (physical layer) to attenuate the effect of the crosstalk.

According to another aspect, the motor power supply comprises rising edges with a pre-determined rise time, and the plurality of carrier frequencies comprises respective frequencies which are selected based on the inverse of the rise time; and/or the motor power supply comprises falling edges with a pre-determined fall time, and the plurality of carrier frequencies comprises respective frequencies which are selected based on the inverse of the fall time. The selection of the respective frequencies may be done once, based on the average parameters of the possible applications. If the particular application generates an unavoidable disturb overlapping with the one or more frequencies, those one or more of the fixed selected frequencies may be abandoned (in other words: may not be used).

A specific rise time of the motor power supply corresponds to a frequency of the inverse of the rise time, and crosstalk between lines carrying the motor signal and lines carrying the sensor data may be high for frequencies corresponding to that frequency. As such, carrier frequencies which are higher than the frequency corresponding to the inverse of the rise time, may be less affected by crosstalk, which may increase robustness against noise like crosstalk from the lines carrying the motor power supply .

According to various embodiments, the plurality of carrier frequencies comprises respective frequencies which are higher than 10% of the inverse of the rise time, or the plurality of carrier frequencies comprises respective frequencies which are higher than 20% of the inverse of the rise time, or the plurality of carrier frequencies comprises respective frequencies which are higher than 50% of the inverse of the rise time, or the plurality of carrier frequencies comprises respective frequencies which are higher than the inverse of the rise time, or the plurality of carrier frequencies comprises respective frequencies which are higher than 10% of the inverse of the fall time, or the plurality of carrier frequencies comprises respective frequencies which are higher than 20% of the inverse of the fall time, or the plurality of carrier frequencies comprises respective frequencies which are higher than 50% of the inverse of the fall time, or the plurality of carrier frequencies comprises respective frequencies which are higher than the inverse of the fall time.

According to another aspect, the plurality of carrier frequencies comprises respective frequencies of at least 10 MHz.

According to another aspect, the sensor signal comprises a data transmission rate of more than 10 MBaud, for example at least 40 MBaud. Compared to conventional methods, the data transmission rate may be increased due to the reduced effect of crosstalk, which may be achieved by using the plurality of carrier frequencies.

According to another aspect, the at least one second line provides high pass filter characteristics. With the high pass filter characteristic, low frequency noise may be removed, and robustness of the data transmission of the sensor signal may be increased.

According to another aspect, the sensor signal is determined based on orthogonal frequency-division multiplexing (OFDM). Using OFDM, the sensor data may be encoded on the plurality of carrier frequencies to obtain the sensor signal. The carrier frequencies may be selected so that crosstalk (or the effect of crosstalk) between the at least one first line and the at least one second line is low.

According to another aspect, the sensor signal is determined using an error correction scheme, for example based on Golay encoding. With an error correction scheme, noise (for example due to crosstalk to the at least one second line from the at least one first line) which effects one or more bits of the transmitted sensor data may be compensated. For example, additional bits may be included in the sensor signal, which may allow detection and recovery of erroneously transmitted bits.

According to another aspect, the sensor data comprises a plurality of bits; and determining the sensor signal comprises: grouping a pre-determined number of the plurality of bits into an encoding block; determining at least one error correction bit based on the encoding block; adding the at least one error correction bit to the encoding block; and encoding the encoding block using the plurality of carrier frequencies. More than one additional error correction bit may be added. With the one or more error correction bits, a transmission error of the sensor data may be detected and/ or corrected. It will be understood that with one error correction bit, an error may be detected (and then for example the respective data may be retransmitted to correct the error), and with more than one error correction bit, the error may be corrected in the received data (without re-transmitting the data).

According to another aspect, the data transmission method further comprises transmitting direct current power via the at least one second line. This may reduce the total number of lines required inside the cable jacket.

According to another aspect, at least one carrier frequency of the plurality of carrier frequencies (for example a carrier frequency which does not represent the sensor data, i.e. which is not used for encoding the sensor data into the sensor signal) is determined based on a minimization of a total signal strength of the plurality of carrier frequencies. This may lower the peak of a symbol represented by the plurality of frequencies, which may avoid clipping of the sensor signal, and which may thus increase reliability of the data transmission method.

The present disclosure further discloses a cable comprising: the at least one first line, the at least one second line, and the common cable jacket used in the method as described above.

In another aspect, the present disclosure is directed at a motor arrangement comprising: a motor; a sensor configured to determine sensor data related to the motor; a cable comprising at least one first line and at least one second line in a common cable jacket; and a control device connected via the cable to the motor and the sensor, the control device configured to transmit a control signal to the motor via the at least first line and to transmit or receive a sensor signal to or from the sensor via the at least one second line; wherein the sensor signal comprises a plurality of carrier frequencies.

Using the plurality of carrier frequencies, the effect of crosstalk between the at least one first line and the at least one second line may be reduced, which may allow for a reduced shielding of the at least one second line and/or an increased data rate for transmission of the sensor data (which are physically transmitted via the sensor signal). With a reduced shielding, the cable drag chain may be reduced, which may enhance handling of the cable.

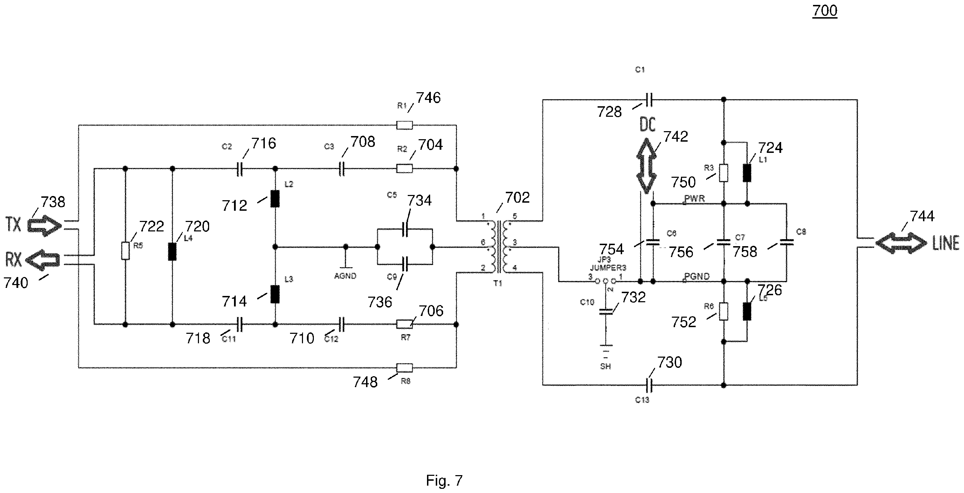

In an example, the at least one second line comprises a twisted pair of lines, which may, for example, be up to 100 m long. With the twisted pair of lines, crosstalk may be reduced, so that the frequency based data transmission method using a plurality of carrier frequencies may be even more effective. DC (direct current) power may be injected and/or retrieved on the at least one second line. DC power injection may be provided by means of a splitter made with signal blocking inductors (for example inductance L1 (724) and inductance L5 (726) as illustrated in Fig. 7) and DC blocking capacitors (for example capacitor C1 (728) and capacitor C13 (730) as illustrated in Fig. 7). For example, the inductors may have an inductance of 100 $\mu$H, and the capacitors may have a capacitance of 470 nF.

The present disclosure further discloses the cable of the motor arrangement as described above.

The present disclosure further discloses an ASIC (application-specific integrated circuit). Providing the function of the data transmission method according to various embodiments in an ASIC entails advantages at customer side, for example less variance in the implementation means lesser and easier support, use of an FPGA (field programmable gate array) may be avoided, and at least a part of the ASIC cost may be distributed into the existing PHY components like transceiver or spare components.

Intrinsic robustness of the data transmission method and the motor arrangement may make a one cable solution (wherein one cable includes the at least one first line and the at least one second line) attractive and may reduce requirements for support. Compared to commonly used one cable solutions, the bandwidth according to various embodiments may more than double which may improve the control loop and enable new applications, for example Industry 4.0 (I4.0) applications. Furthermore, according to various embodiments, smaller and cheaper PHY components may be used due to higher frequencies used.

With a data transmission and a related motor arrangement according to various embodiments, data throughput and robustness against noise may be increased.

Based on the increased robustness due to the various frequencies used for data transmission, a cable which includes lines for the motor power supply and for sensor data may require less shielding for the lines carrying the sensor data to achieve the same data rate of conventional data transmission methods, or a higher data rate may be achieved with same shielding of conventional cables.

Exemplary embodiments and functions of the present disclosure are described herein in conjunction with the following drawings, showing schematically:

Fig. 1 an illustration of a motor arrangement according to various embodiments;

Fig. 2  an illustration of signal transmission according to various embodiments;

Fig. 3  an illustration of a cyclic prefix according to various embodiments;

Fig. 4  an illustration of several different constellations according to various embodiments;

Fig. 5  an illustration of a model of the effect of the physical layer according to various embodiments;

Fig. 6  an illustration of results obtained by a simulation of the model of Fig. 5;

Fig. 7  an illustration of a detailed model of the physical layer according to various embodiments;

Fig. 8  an illustration of an error encoding scheme where the bit stream of every logical channel is protected individually with the error correction coding scheme according to various embodiments; and

Fig. 9  a flow diagram illustrating a data transmission method according to various embodiments.

Driving electric motors may not only require motor power connections to be provided to the electric motor, but may also involve sensor data (for example measurement data or sensor configuration data) to be provided from and to a sensor mounted at the motor side.

According to various embodiments, data interfacing may be provided, wherein transfer data to and from a position encoder is provided while powering the position encoder through a single shielded twisted pair line which runs inside the same cable connecting an electric motor to its drive.

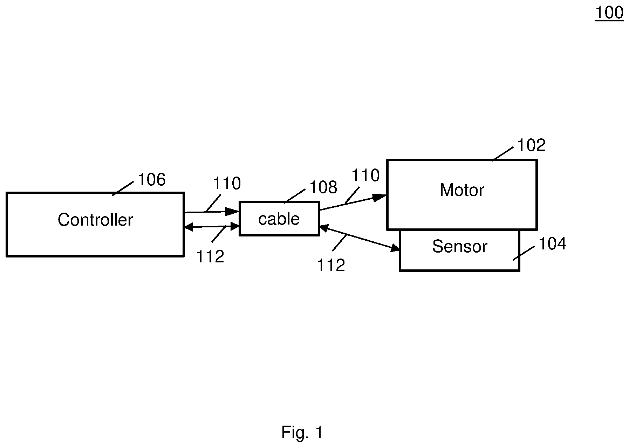

Fig. 1 shows an illustration 100 of a motor arrangement according to various embodiments with a motor 102, a sensor 104 associated with the motor 102, a control unit 106, and a cable 108 connecting the control unit 106 with the motor 102 and with the sensor 104. The cable 108 may include at least one first line 110 for providing the motor power supply from the control unit 106 to the motor 102, and at least one second line 112 for transmitting or receiving the sensor signal from or in the control unit 106. The at least one first line 110 and the at least one second line 112 may be provided in a common cable jacket, so that the at least one first line 110, the at least one second line 112, and the cable jacket form the cable 108. The sensor 104 may measure the state of the motor 102, for example its angle, velocity, temperature, voltage, current draw, or information about mechanical vibration of the motor of further external data (which may not necessarily be related to an axis of the motor). The sensor data may include the respective measurement results.

According to various embodiments, modulation may be used to increase the channel bandwidth, to transmit more than one bit in a single symbol and to free the lower portion of the spectrum. A high pass physical interface (PHY) may be provided to shorten the effect of the noise, and to reduce the number of affected symbols. ECC may be used to withstand errors at every foreseen noise event. The spectrum occupation of the signal may be restricted to the range between about 10 MHz and about 30 MHz. With an upper limit of 30 MHz, the use of expensive components and critical workmanship requirements toward the users may be avoided while achieving good transmission quality of the lines and normal quality lines can be used. A lower limit of 10 MHz may make it possible the use a physical layer with high pass behavior, which may provide for noise rejection and which may allow sharing the line with a DC (direct current) feeding function (to power the sensor).

Modulation may be provided, for example orthogonal frequency division multiplexing (OFDM).

In the following, the basic principle of OFDM, which is applied according to various embodiments, will be described.

For example, a signal waveform sampled at a rate which is an integer multiple of its period may be considered, for instance N=16 samples may be taken. The Fourier analysis decomposes this signal into a series of harmonics amplitude and phase. For example from the discrete samples $x_0$, $x_1$, ..., $x_{14}$, $x_{15}$, the harmonics:

$$X_0, X_1, ..., X_7, X_8$$

may be extracted using the Discrete Fourier Transform:

$$X_k = \sum_{n=0}^{N-1} x_n \cdot e^{-\frac{i2\pi}{N}kn}$$

Being the input series formed by real numbers, the $X_k$ may be as follows: $X_0$ may be a real number corresponding with the average value of the waveform; $X_1$, $X_2$, ..., $X_7$ may be complex numbers representing the amplitude and phase of the first seven harmonics of the signal; and $X_8$ may be a real number related to the presence of eighth harmonic and the relative phase of the sampling operation.

The signal must contain just the above harmonic components to avoid leakage and aliasing phenomena that would create crosstalk between the channels. At the transmitter side, such a signal may be generated by summing the different harmonics with the wanted amplitude and phase, or equivalently by an Inverse Discrete Fourier Transformation.

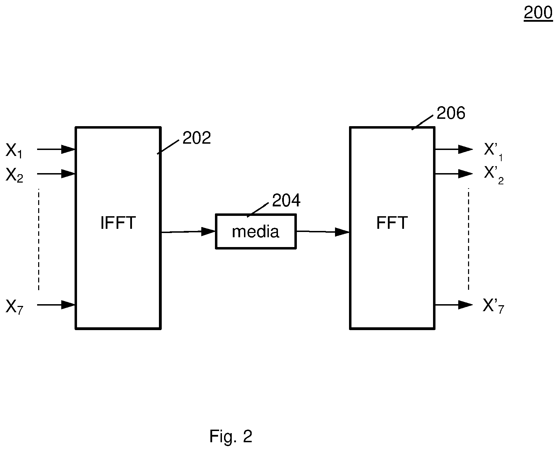

Fig. 2 shows an illustration 200 of signal transmission according to various embodiments. Several in-

formation sources $X_1, X_2, ..., X_7$ (for example sensor data) may be mixed into a single signal (for example sensor signal) using inverse (discrete) Fourier transform, which may be implemented as an inverse fast Fourier transform (IFFT) 202. The signal may be transmitted via media 204 (for example one or more lines in a cable). The received signal may then be separated based on the properties of the DFT (which may be implemented as a fast Fourier transform FFT 206). The received signal may thus provide the received data $X'_1, X'_2, ..., X'_7$ (which ideally are identical or similar to the transmitted data $X_1, X_2, ..., X_7$). The signal transmission illustrated in Fig. 2 may provide a system in which a set of independent (orthogonal) channels share the same media 204.

In an ideal case the received harmonics $X'_1...X'_7$ perfectly match the original information $X_1...X_7$. In the system of Fig. 2, the harmonic $X_0$ may purposely not be included in order to generate a DC (direct current) balanced signal. The harmonic $X_8$ may also not be included in the system of Fig. 2, since $X_8$ can't carry information like the other harmonics since it is exactly at the Nyquist frequency. However, $X_8$ may be used instead for synchronization purpose.

Considering the transfer function of the media 204 (which may include at least one line and the physical driver and receiver), the assumption $X_n=X'_n$ may not be exactly correct: each harmonic may undergo a different attenuation and phase rotation depending on its frequency. As far as the transformation is linear, the phase differences and amplitude ratios may be maintained, and equalization may be done at the receiver based on a known signal sent once by the transmitter. For example, during the startup phase, the transmitter (or sender) may transmit a signal with a known phase (for example with phase 0°) and known amplitude at all frequencies. The receiver may measure phases and amplitudes and may find the transformation to be applied to each component so as to recover the same readings (phase 0° and reference amplitude level). In practice, having chosen a modulation scheme (for example QPSK) where the amplitude is not affecting the received bit decision, it may be sufficient to adjust the phase only.

An advantage of this scheme is that it can be considered as made by individual narrowband transmission systems, so that equalization reduces to the simple abovementioned operation.

The memory effect of the media transfer function may generate intersymbolic interference (in other words: the tail of the response of one symbol may overlap with the next symbol), which may add unwanted harmonics to the results. According to various embodiments, this may be mitigated by separating the payload symbols in time, and providing a cyclical prefix (in other words: filling the spaces so that the incoming signal is prefixed by its last portion in order to put the line in condition similar to a steady state transmission of a periodical signal).

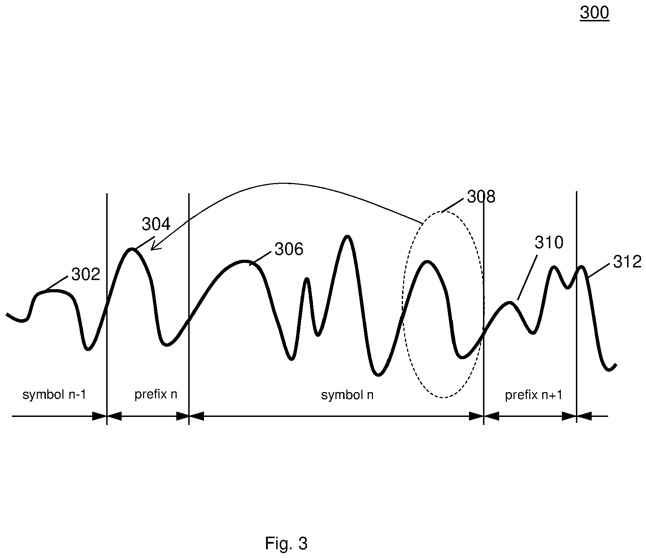

Fig. 3 shows an illustration 300 of a cyclic prefix according to various embodiments. An (n-1)th symbol 302 may be transmitted. Between the (n-1)th symbol 302 and the subsequent n-th symbol 306, an n-th prefix 304, which may be identical to the last portion 308 of the n-th symbol 306, may be transmitted. Likewise, before transmission of the (n+1)th signal 312, an (n+1)th prefix 310 may be transmitted.

Each channel allows the transport of two physical quantities (for example amplitude and phase, or for example in-phase and quadrature components) for each transferred symbol. A discrete set of combinations of these quantities may be chosen as the symbol alphabet. Choosing an alphabet with more elements may allow a higher throughput as more bits are transported within one symbol, but also may make transmission errors more probable as less noise is enough to change one element into another.

The whole alphabet plotted on the complex plane may be called a constellation.

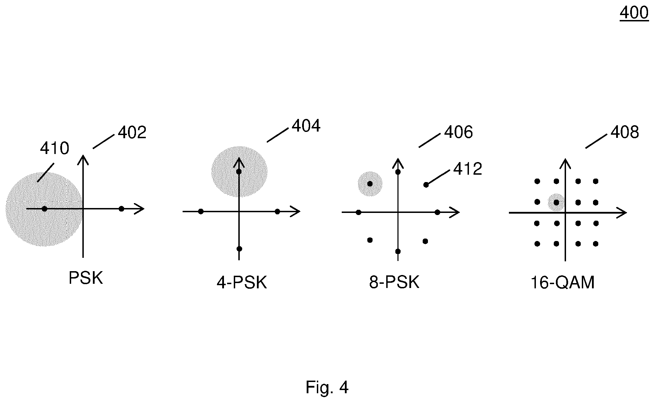

Fig. 4 shows an illustration 400 of several different constellations according to various embodiments. It will be understood that the constellations shown in Fig. 4 are examples only, and that constellations with more points exist. A PSK constellation 402, a 4-PSK constellation 404, a 8-PSK constellation 406, and a 16-QAM constellation 408 are illustrated in Fig. 4, wherein PSK stands for phase-shift keying and QAM stands for quadrature amplitude modulation. For each constellation, the horizontal axis represents the in-phase component and the vertical axis represents the quadrature component. The gray circles (one of which is exemplarily labelled with reference sign 410) show the allowed noise before a transmission error occurs. Each element of the alphabet is indicated by a dot, one of which is exemplarily labelled with reference sign 412.

According to various embodiments, the 4-PSK (which may be referred to as QPSK) constellation may be adopted (or used). The 4-PSK constellation may have a good noise margin and its decision zones may be easy to implement and independent from the amplitude. This last feature simplifies the equalization as just a phase alignment is sufficient; and furthermore, the signal amplitude may also be dynamically adapted to the available headroom without need for adjustment at the receiver side. Having 4 points, this alphabet allows carrying 2 bits per symbol.

According to various embodiments, where the signal spectrum may occupy the range between about 10 MHz and about 30 MHz, an implementation may be set up as follows:

|                      |          |
|----------------------|----------|
| sampling frequency:  | 75 MHz;  |
| samples in a symbol: | 16;      |
| samples in the prefix: | 4; and |
| modulation type:     | QPSK.    |

Each symbol plus its prefix may last 266.7 ns, and each channel may carry two bits, thus achieving a capacity of 7.5 MBaud.

The harmonics may have frequencies equal to $F_1$ = 4.6875 MHz and its first six multiples from $F_2$ = 9.375 MHz up to $F_7$ = 32.8125 MHz. While $F_7$ is acceptably close to the fixed range (for example 10 MHz to 30 MHz), $F_1$ is way far from it. Thus, according to various embodiments, the information may be coded using just channels from 2 to 7 which amounts to a total capacity of 45 MBaud.

While countermeasures may be taken to avoid missing synchronization, a situation of missing synchronization may be possible. Thus, it has to be taken into account that the analyzer may not be synchronized with the symbol boundaries and it is not able to exclude the cyclical prefixes from the data, so that the result may suffer from leakage that strays it from the theoretical expectation.

A possible drawback of OFDM signals may be their high crest factor, i.e. a high ratio between the peak level and rms (root mean square). When all harmonics add up in phase, a great peak may be generated, which statistically happens rarely. That means that in order not to clip the signal, a low level must be set with respect to the total dynamic of the analog driver stage. However, the signal to noise ratio may suffer from that, which may endanger the communication reliability.

Several methods may be provided to overcome this effect. One of those is the "tone reservation", which means to dedicate some channels to transmit information other than the payload, and which may purposely be chosen in order to lower the peak of the symbol. While the scarce number of available channels may advise against this solution, according to various embodiments, the already discarded frequency $F_1$ may be used for that purpose. Thus, according to various embodiments, the fundamental frequency $F_1$ may be generated with the purpose of countering the signal peaks and may not be considered by the receiver.

The OFDM modulated signal is transmitted via at least one line over the physical interface.

The high pass behavior of the physical layer has the scope of attenuating and shortening the effect of the crosstalk from the offender signal (i.e. crosstalk from the motor power supply to the sensor data).

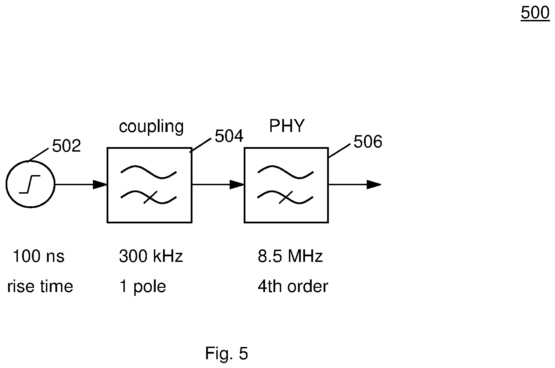

Fig. 5 shows an illustration 500 of a model of the effect of the physical layer according to various embodiments. A trapezoidal pulse generator 502 (for example with a rise time of 100ns) may represent the drive power stage output. A first block 504 may represent the coupling mechanism to this signal (i.e. to the trapezoidal pulse generated by trapezoidal pulse generator 502) which may be translated into a single pole high pass (for example with a high pass frequency of 300 kHz), since the coupling is mainly capacitive. A filter 506 provided by the PHY may for example be modelled as a 4th order Butterworth high pass at 8.5 MHz.

The gain of the noise coupling may vary from case to case and may depend on several factors, like for example the effectiveness of the data line shielding and the common mode to differential mode conversion factor of the system. In order to describe the basic concept of various embodiments, the noise may be disregarded and the absolute amplitude of the noise may not be significant in the examples described herein. In order to evaluate an embodiment regarding the frequency behavior, a conservative assumption is made that everything above 300 kHz is fully coupled (which is represented by the first block 504 in Fig. 4).

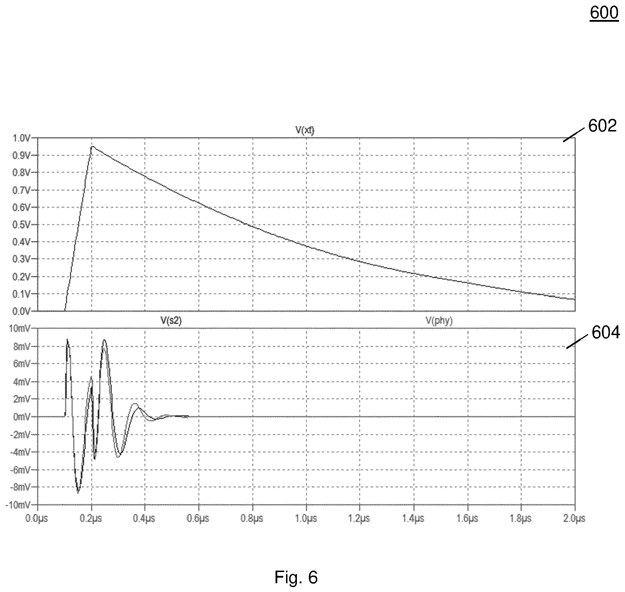

Fig. 6 shows illustrations 600 of results obtained by a simulation of the model of Fig. 5 with Spice. The upper graph 602 of Fig. 6 shows the output of the coupling block 504 which is what can be expected directly on the line. The lower graph 604 of Fig. 6 shows the output of the model shown in Fig. 6 with a simulation of the actually implemented PHY (i.e. with a more detailed model of the physical layer); the two results are so close together that there is almost no difference visible in the plot 604 of Fig. 6.

The significant portion of the noise on the receiving end of the chain lasts less than 300 ns, as is shown in the plot 604 of Fig. 6.

With the PHY according to various embodiments, a signal may be transmitted on the line with low attenuation. The incoming signal may be extracted from the line cutting the frequencies below the useful range (for example, cutting the frequencies below about 10 MHz). The PHY according to various embodiments may provide a path for injecting and retrieving the DC power supply. An impedance equal to the characteristic impedance of the line may be provided in order to avoid reflections. The receiving port may be isolated (or shielded) from the common mode disturbance coming from the line.

Crosstalk may be limited by a differential transmission scheme, wherein the electrical information is sent as a voltage difference on the lines, and retrieved by making the circuit sensible to the voltage difference only. Mostly, the noise is injected on both lines of the twisted pair by the same amount so that the difference operation made at the receiving side cancels it. Unbalances (different input impedances of the two branches, or differences in the coupling between the two wires of the couple) generate distortions, so that the noise is injected differently on the two inputs and the difference operation does not completely cancel it. In order to improve the symmetry of the circuit, it may be desired to achieve an input impedance as high as possible for common mode signals, in order to limit the common mode currents generated by the crosstalk as much as possible.

Fig. 7 shows an illustration 700 of a detailed model of the physical layer according to various embodiments, which may include a transformer 702 and a network of passive components 704, 706, 708, 710, 712, 714, 716, 718, 720, 722, that implement the high pass filtering.

The PHY contains a high pass filter between the physical reception point of the interface and the further processing (A/D (analog/digital) converter). The signal enters from the "LINE" port 744, passes through the transformer 702 and then through a block (including a resistor R2 (704), a resistor R7 (706), a capacitor C3 (708), a capacitor C12 (710), an inductance L2 (712), and inductance L3 (714), a capacitor C2 (716), a capacitor C11 (718), an inductance L4 (720), and a resistor R5 (722)) which implements the high pass filter before reaching the A/D converter at port "RX" (receive port) 740. Similarly, signals may be transmitted from the port "TX" (transmit port) 738 to the "LINE" port 744.

DC power may be injected in a DC path 742. A signal/DC splitter may be provided by an inductance L1 (724), an inductance L5 (726), a capacitor C1 (728), and a capacitor C13 (730).

In order to improve the symmetry of the circuit, it may be desired to achieve an input impedance as high as possible for common mode signals, in order to limit the common mode currents generated by the crosstalk as much as possible, which may be the main role of the transformer 702. Capacitors C10 (732) and C5/C9 (734/736) may be placed on the central taps of the transformer 702 to ground the common mode components.

The resistors R1 (746) and R8 (748) allow to inject the signal on the line maintaining the right impedance and reading at the same time the incoming signal.

The resistors R3 (750) and R6 (752) may provide dumping the resonance peak created by the inductances L1 (724) and L5 (726) interacting with the system capacitances.

The capacitors C6 (754), C7 (756), and C8 (758) are bypass capacitors to keep a very low impedance on the DC output at all frequencies of interest.

According to various embodiments, the transmission of the signals may be robust. A first degree of robustness may be given by the high pass PHY combined with the signal modulation. According to various embodiments, using OFDM, 12 bits may be combined into a symbol that lasts 266 ns (wherein the actual information portion is 213 ns). In contrast to a baseband scheme, where every instant is dedicated to the transmission of a single bit, according to various embodiments, more bits may be simultaneously spread over time using OFDM, making it more unlikely that a single noise peak could completely flip the transmitted state. The same consideration can be translated in frequency domain: every channel is disturbed just by the noise content at its particular frequency, which is less than the total.

It is to be noted that increasing the offender slew rate may result in a higher but shorter response at the end of the chain. However, considering that one noise event could completely destroy all the bits carried by two consecutive symbols may be extremely pessimistic.

According to various embodiments, the robustness of the transmission of the signals may further be increased by applying error correction coding. The increased data throughput according to various embodiments allows dedicating a part of the data throughput for adding redundancy. For example, the Golay(24,12) encoding scheme may be considered for its error correction capability. The Golay(24,12) encoding scheme is a block code that adds 12 redundancy bits to every 12 payload bits and guarantees the correction of up to three errors in the resulting packet.

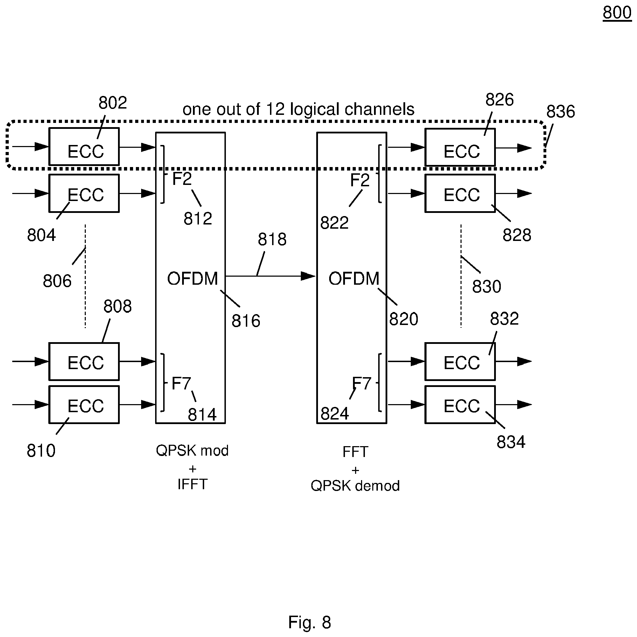

Fig. 8 shows an illustration 800 of an error encoding scheme where the bit stream of every logical channel is protected individually with the error correction coding scheme according to various embodiments. Protecting the bit stream of every logical channel individually with the error correction coding scheme may provide high robustness.

For example, a data unit made by 24 symbols, where 12 streams are simultaneously encoded and sent, may be considered. An ECC (error correction code) may be provided by each of the ECC operators 802, 804, 808, 810 (for example encoders). Each frequency F2 (812), F3, ..., F6, F7 (814) may carry two ECCs, which may be modulated and an IFFT may be applied by block 816 before transmitting the resulting signal over media (for example at least one line) 818. FFT and demodulation may be carried out by block 820, to reconstruct the frequencies F2 (822), F3, ..., F6, F7 (824), and the ECC operators 826, 828, 830, 832, and 834 (for example decoders) may reconstruct the respective ECCs. One of the 12 logical channels 836 is indicated by a dotted box for illustration purposes in Fig. 8.

At every 24 * 266 ns = 6.4 $\mu$s a data unit is transferred and every stream produces its 12 bits payload; the throughput is then 144 bits in 6.4 $\mu$s, or 22.5 MBaud.

Under the hypothesis made above of two bits flipped for each data stream at every noise event, the system would sustain statistically one and a half event every 6.4 $\mu$s, so one every 4.2 $\mu$s.

A motor drive switching at 32 kHz produces one event every 15.6 $\mu$s for each motor phase which means one event every 5.2 $\mu$s in total. Also in case that every switching of the power bridge completely destroys two symbols, the payload would not be affected. Besides the very conservative assumptions made above, it must be considered that the most challenging events are the simultaneous phase commutations, which happens for instance when the motor is at standstill. This makes stronger noise effects but reduces the frequency of the events, going in the safe direction regarding the error correction.

In an alternative, error correction based on convolutional code and Viterbi decoding may be provided, which may require less overhead than the Golay(24,12) encoding.

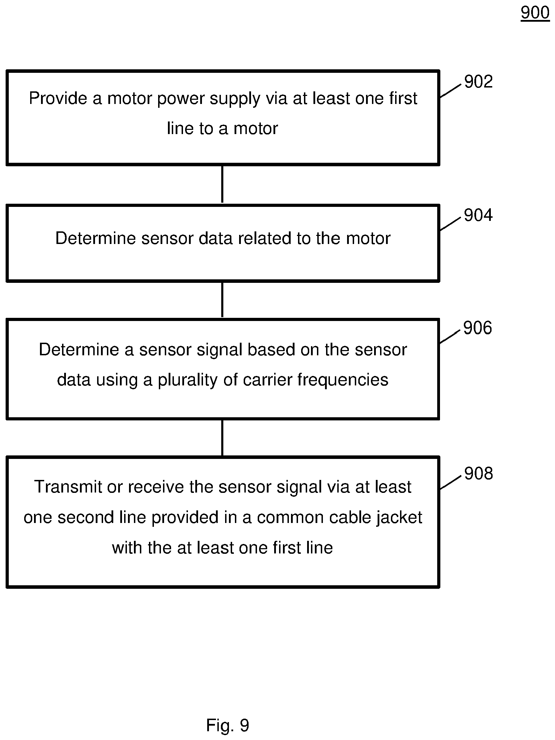

Fig. 9 shows a flow diagram illustrating a data transmission method according to various embodiments. At 902, a motor power supply may be provided via at least one first line to a motor. At 904, sensor data related to the motor may be determined. At 906, a sensor signal may be determined based on the sensor data using a plurality of carrier frequencies. At 908, the sensor signal may be transmitted or received via at least one second line provided in a common cable jacket with the at least one first line.

According to various embodiments, the motor power supply comprises rising edges with a pre-determined rise time, and the plurality of carrier frequencies comprises respective frequencies which are selected based on the inverse of the rise time. According to various embodiments, the motor power supply comprises falling edges with a pre-determined fall time, and the plurality of carrier frequencies comprises respective frequencies which are selected based on the inverse of the fall time.

According to various embodiments, the motor power supply comprises rising edges with a pre-determined rise time, and the plurality of carrier frequencies comprises respective frequencies which are higher than 10% of the inverse of the rise time, or the plurality of carrier frequencies comprises respective frequencies which are higher than 20% of the inverse of the rise time, or the plurality of carrier frequencies comprises respective frequencies which are higher than 50% of the inverse of the rise time, or the plurality of carrier frequencies comprises respective frequencies which are higher than the inverse of the rise time.

According to various embodiments, the motor power supply comprises falling edges with a pre-determined rise time, and the plurality of carrier frequencies comprises respective frequencies which are higher than 10% of the inverse of the fall time, or the plurality of carrier frequencies comprises respective frequencies which are higher than 20% of the inverse of the fall time, or the plurality of carrier frequencies comprises respective frequencies which are higher than 50% of the inverse of the fall time, or the plurality of carrier frequencies comprises respective frequencies which are higher than the inverse of the fall time.

According to various embodiments, the plurality of carrier frequencies comprises respective frequencies of at least 10 MHz.

According to various embodiments, the sensor signal comprises a data transmission rate of at least 40 MBaud.

According to various embodiments, the at least one second line provides high pass filter characteristics.

According to various embodiments, the sensor signal is determined based on orthogonal frequency-division multiplexing.

According to various embodiments, the sensor signal is determined using an error correction scheme.

According to various embodiments, the error correction scheme comprises Golay encoding.

According to various embodiments, the sensor data comprises a plurality of bits, and determining the sensor signal comprises: grouping a pre-determined number of the plurality of bits into an encoding block; determining at least one error correction bit based on the encoding block; adding the at least one error correction bit to the encoding block; and encoding the encoding block using the plurality of carrier frequencies.

According to various embodiments, the data transmission method further comprises transmitting direct current power via the at least one second line. According to various embodiments, at least one carrier frequency of the plurality of carrier frequencies is determined based on a minimization of a total signal strength of the plurality of carrier frequencies.

According to various embodiments, the at least one carrier frequency of the plurality of carrier frequencies does not represent the sensor data.

Reference numeral list

| | |
|---|---|
| 100 | illustration of a motor arrangement according to various embodiments |
| 102 | motor |
| 104 | sensor |
| 106 | controller |
| 108 | cable |
| 110 | at least one first line |
| 112 | at least one second line |
| 200 | illustration of signal transmission according to various embodiments |
| 202 | IFFT |
| 204 | media |
| 206 | FFT |
| 300 | illustration of a cyclic prefix according to various embodiments |
| 302 | symbol n-1 |
| 304 | prefix n |
| 306 | symbol n |
| 308 | last portion of symbol n |
| 310 | prefix n+1 |
| 312 | symbol n+1 |
| 400 | illustration of several different constellations according to various embodiments |
| 402 | PSK constellation |
| 404 | 4-PSK constellation |
| 406 | 8-PSK constellation |
| 408 | 16-QAM constellation |
| 410 | circle indicating allowed noise before a transmission error occurs |
| 412 | dot indicating element of the alphabet |
| 500 | illustration of a model of the effect of the physical layer according to various embodiments |
| 502 | pulse generator |
| 504 | first block |
| 506 | filter |
| 600 | illustration of results obtained by a simulation of the model of Fig. 5 |
| 602 | upper graph |
| 604 | lower graph |
| 700 | illustration of a detailed model of the physical layer according to various embodiments |
| 702 | transformer |

| | |
|---|---|
| 704 | resistor |
| 706 | resistor |
| 708 | capacitor |
| 710 | capacitor |
| 712 | inductance |
| 714 | inductance |
| 716 | capacitor |
| 718 | capacitor |
| 720 | inductance |
| 722 | resistor |
| 724 | inductance |
| 726 | inductance |
| 728 | capacitor |
| 730 | capacitor |
| 732 | capacitor |
| 734 | capacitor |
| 736 | capacitor |
| 738 | transmit port |
| 740 | receive port |
| 742 | DC path |
| 744 | LINE port |
| 746 | resistor |
| 748 | resistor |
| 750 | resistor |
| 752 | resistor |
| 754 | capacitor |
| 756 | capacitor |
| 758 | capacitor |
| | |
| 800 | illustration of an error encoding scheme where the bit stream of every logical channel is protected individually with the error correction coding scheme according to various embodiments |
| 802 | ECC operator |
| 804 | ECC operator |
| 806 | ECC operator |
| 808 | ECC operator |
| 810 | ECC operator |
| 812 | F2 |
| 814 | F7 |
| 816 | OFDM |
| 818 | media |
| 820 | OFDM |
| 822 | F2 |
| 824 | F7 |
| 826 | ECC operator |
| 828 | ECC operator |
| 830 | ECC operator |
| 832 | ECC operator |
| 834 | ECC operator |
| 836 | dotted box illustrating one logical channel |
| | |
| 900 | a flow diagram illustrating a data transmission method according to various embodiments |
| 902 | step of transmitting a motor power supply via at least one first line to a motor |
| 904 | step of determining sensor data related to the motor |
| 906 | step of determining a sensor signal based on the sensor data using a plurality of carrier frequencies |
| 908 | step of transmitting or receiving the sensor signal via at least one second line provided in a common cable jacket with the at least one first line |

**Claims**

1. Data transmission method comprising:

   providing (902) a motor power supply via at least one motor cable (110) to a motor (102);
   determining (904) sensor data related to the motor (102);
   determining (906) a sensor signal based on the sensor data using a plurality of carrier frequencies (812, 814, 822, 824); and
   transmitting or receiving (908) the sensor signal via at least one data line (112) provided in a common cable jacket (108) with the at least one motor cable (110);
   **characterized by**:

   the motor power supply comprising rising edges with a pre-determined rise time, wherein the plurality of carrier frequencies (812, 814, 822, 824) comprises respective frequencies which are selected based on the inverse of the rise time; and/or
   the motor power supply comprising falling edges with a pre-determined fall time, wherein the plurality of carrier frequencies (812, 814, 822, 824) comprises respective frequencies which are selected based on the inverse of the fall time.

2. The data transmission method of claim 1,

   wherein the motor power supply comprises rising edges with a pre-determined rise time and/or falling edges with a pre-determined fall time; and
   wherein the plurality of carrier frequencies (812, 814, 822, 824) comprises respective frequencies which are higher than 10% of the inverse of the rise time, or
   wherein the plurality of carrier frequencies (812, 814, 822, 824) comprises respective frequencies which are higher than 20% of the inverse of the rise time, or
   wherein the plurality of carrier frequencies (812, 814, 822, 824) comprises respective frequencies which are higher than 50% of the inverse of the rise time, or
   wherein the plurality of carrier frequencies (812, 814, 822, 824) comprises respective frequencies which are higher than the inverse of the rise time; or wherein the plurality of carrier frequencies (812, 814, 822, 824) comprises respective frequencies which are higher than 10% of the inverse of the fall time, or
wherein the plurality of carrier frequencies (812, 814, 822, 824) comprises respective frequencies which are higher than 20% of the inverse of the fall time, or
wherein the plurality of carrier frequencies (812, 814, 822, 824) comprises respective frequencies which are higher than 50% of the inverse of the fall time, or
wherein the plurality of carrier frequencies (812, 814, 822, 824) comprises respective frequencies which are higher than the inverse of the fall time.

3.  The data transmission method of at least one of claims 1 to 2,
    wherein the plurality of carrier frequencies (812, 814, 822, 824) comprises respective frequencies of at least 10 MHz.

4.  The data transmission method of at least one of claims 1 to 3,
    wherein the sensor signal comprises a data transmission rate of at least 40 MBaud.

5.  The data transmission method of at least one of claims 1 to 4,
    wherein the at least one data line (112) provides high pass filter characteristics.

6.  The data transmission method of at least one of claims 1 to 5,
    wherein the sensor signal is determined based on orthogonal frequency-division multiplexing.

7.  The data transmission method of at least one of claims 1 to 6,
    wherein the sensor signal is determined using an error correction scheme.

8.  The data transmission method of claim 7,
    wherein the error correction scheme comprises Golay encoding.

9.  The data transmission method of at least one of claims 1 to 8,

    wherein the sensor data comprises a plurality of bits; and
    wherein determining the sensor signal comprises:

    grouping a pre-determined number of the plurality of bits into an encoding block;
    determining at least one error correction bit based on the encoding block;

adding the at least one error correction bit to the encoding block; and
encoding the encoding block using the plurality of carrier frequencies (812, 814, 822, 824).

10. The data transmission method of at least one of claims 1 to 9, further comprising:
    transmitting direct current power via the at least one data line (112).

11. The data transmission method of at least one of claims 1 to 9,
    wherein at least one carrier frequency of the plurality of carrier frequencies (812, 814, 822, 824) is determined based on a minimization of a total signal strength of the plurality of carrier frequencies (812, 814, 822, 824).

12. The data transmission method of claim 11,
    wherein the at least one carrier frequency of the plurality of carrier frequencies (812, 814, 822, 824) does not represent the sensor data.

13. Motor arrangement (100) comprising:

    a motor (102);
    a sensor (104) configured to determine sensor data related to the motor (102);
    a cable (108) comprising at least one motor cable (110) and at least one data line (112) in a common cable jacket; and
    a control device (106) connected via the cable (108) to the motor (102) and the sensor (104), the control device (106) configured to transmit a motor power supply to the motor (102) via the at least one motor cable (110) and to transmit or receive a sensor signal to or from the sensor (104) via the at least one data line (112);
    wherein the sensor signal comprises a plurality of carrier frequencies (812, 814, 822, 824);
    **characterized by**:

    the motor power supply comprising rising edges with a pre-determined rise time, wherein the plurality of carrier frequencies (812, 814, 822, 824) comprises respective frequencies which are selected based on the inverse of the rise time; and/or
    the motor power supply comprising falling edges with a pre-determined fall time, wherein the plurality of carrier frequencies (812, 814, 822, 824) comprises respective frequencies which are selected based on the inverse of the fall time.

14. The motor arrangement (100) of claim 13,
    wherein the at least one data line (112) comprises a twisted pair of lines.

**Patentansprüche**

1. Datenübertragungsverfahren, das umfasst:

Bereitstellen (902) einer Motorstromversorgung über mindestens ein Motorkabel (110) an einen Motor (102);

Bestimmen (904) von Sensordaten in Bezug auf den Motor (102);

Bestimmen (906) eines Sensorsignals basierend auf den Sensordaten unter Verwendung einer Vielzahl von Trägerfrequenzen (812, 814, 822, 824); und

Senden oder Empfangen (908) des Sensorsignals über mindestens eine Datenleitung (112), die in einem gemeinsamen Kabelmantel (108) mit dem mindestens einen Motorkabel (110) bereitgestellt ist;

**dadurch gekennzeichnet, dass**:

die Motorstromversorgung ansteigende Flanken mit einer vorbestimmten Anstiegszeit umfasst, wobei die Vielzahl von Trägerfrequenzen (812, 814, 822, 824) jeweilige Frequenzen umfasst, die auf der Grundlage des Kehrwerts der Anstiegszeit ausgewählt werden; und/oder

die Motorstromversorgung abfallende Flanken mit einer vorbestimmten Abfallzeit umfasst, wobei die Vielzahl von Trägerfrequenzen (812, 814, 822, 824) jeweilige Frequenzen umfasst, die auf der Grundlage des Kehrwerts der Abfallzeit ausgewählt werden.

2. Datenübertragungsverfahren nach Anspruch 1,

wobei die Motorstromversorgung ansteigende Flanken mit einer vorbestimmten Anstiegszeit und/oder abfallende Flanken mit einer vorbestimmten Abfallzeit umfasst; und

wobei die Vielzahl von Trägerfrequenzen (812, 814, 822, 824) jeweilige Frequenzen umfasst, die höher als 10 % des Kehrwerts der Anstiegszeit sind, oder

wobei die Vielzahl von Trägerfrequenzen (812, 814, 822, 824) jeweilige Frequenzen umfasst, die höher als 20 % des Kehrwerts der Anstiegszeit sind, oder

wobei die Vielzahl von Trägerfrequenzen (812, 814, 822, 824) jeweilige Frequenzen umfasst, die höher als 50 % des Kehrwerts der Anstiegszeit sind, oder

wobei die Vielzahl von Trägerfrequenzen (812, 814, 822, 824) jeweilige Frequenzen umfasst, die höher als der Kehrwert der Anstiegszeit sind; oder

wobei die Vielzahl von Trägerfrequenzen (812, 814, 822, 824) jeweilige Frequenzen umfasst, die höher als 10 % des Kehrwerts der Abfallzeit sind, oder

wobei die Vielzahl von Trägerfrequenzen (812, 814, 822, 824) jeweilige Frequenzen umfasst, die höher als 20 % des Kehrwerts der Abfallzeit sind, oder

wobei die Vielzahl von Trägerfrequenzen (812, 814, 822, 824) jeweilige Frequenzen umfasst, die höher als 50 % des Kehrwerts der Abfallzeit sind, oder

wobei die Vielzahl von Trägerfrequenzen (812, 814, 822, 824) jeweilige Frequenzen umfasst, die höher als der Kehrwert der Abfallzeit sind.

3. Datenübertragungsverfahren nach mindestens einem der Ansprüche 1 bis 2, wobei die Vielzahl von Trägerfrequenzen (812, 814, 822, 824) jeweilige Frequenzen von mindestens 10 MHz umfasst.

4. Datenübertragungsverfahren nach mindestens einem der Ansprüche 1 bis 3, wobei das Sensorsignal eine Datenübertragungsrate von mindestens 40 MBaud umfasst.

5. Datenübertragungsverfahren nach mindestens einem der Ansprüche 1 bis 4, wobei die mindestens eine Datenleitung (112) Hochpassfiltereigenschaften bereitstellt.

6. Datenübertragungsverfahren nach mindestens einem der Ansprüche 1 bis 5, wobei das Sensorsignal auf der Grundlage eines orthogonalen Frequenzmultiplexverfahrens bestimmt wird.

7. Datenübertragungsverfahren nach mindestens einem der Ansprüche 1 bis 6, wobei das Sensorsignal unter Verwendung eines Fehlerkorrekturschemas bestimmt wird.

8. Datenübertragungsverfahren nach Anspruch 7, wobei das Fehlerkorrekturschema eine Golay-Codierung umfasst.

9. Datenübertragungsverfahren nach mindestens einem der Ansprüche 1 bis 8,

wobei die Sensordaten eine Vielzahl von Bits umfassen; und

wobei das Bestimmen des Sensorsignals umfasst:

Gruppieren einer vorbestimmten Anzahl der Vielzahl von Bits zu einem Kodierungsblock;

Bestimmen mindestens eines Fehlerkorrekturbits auf der Grundlage des Kodierungsblocks;

Hinzufügen des mindestens einen Fehlerkorrekturbits zum Kodierungsblock; und Kodieren des Kodierungsblocks unter Verwendung der Vielzahl von Trägerfrequenzen (812, 814, 822, 824).

10. Datenübertragungsverfahren nach mindestens einem der Ansprüche 1 bis 9, das ferner umfasst: Übertragen von Gleichstromleistung über die mindestens eine Datenleitung (112).

11. Datenübertragungsverfahren nach mindestens einem der Ansprüche 1 bis 9, wobei mindestens eine Trägerfrequenz der Vielzahl von Trägerfrequenzen (812, 814, 822, 824) auf der Grundlage einer Minimierung einer Gesamtsignalstärke der Vielzahl von Trägerfrequenzen (812, 814, 822, 824) bestimmt wird.

12. Datenübertragungsverfahren nach Anspruch 11, wobei die mindestens eine Trägerfrequenz der Vielzahl von Trägerfrequenzen (812, 814, 822, 824) nicht die Sensordaten darstellt.

13. Motoranordnung (100), die umfasst:

einen Motor (102);
einen Sensor (104), der so konfiguriert ist, dass er Sensordaten in Bezug auf den Motor (102) bestimmt;
ein Kabel (108) mit mindestens einem Motorkabel (110) und mindestens einer Datenleitung (112) in einem gemeinsamen Kabelmantel; und
eine Steuervorrichtung (106), die über das Kabel (108) mit dem Motor (102) und dem Sensor (104) verbunden ist, wobei die Steuervorrichtung (106) so konfiguriert ist, dass sie über das mindestens eine Motorkabel (110) eine Motorstromversorgung an den Motor (102) sendet und über die mindestens eine Datenleitung (112) ein Sensorsignal an den oder von dem Sensor (104) sendet oder empfängt;
wobei das Sensorsignal eine Vielzahl von Trägerfrequenzen (812, 814, 822, 824) umfasst;
**dadurch gekennzeichnet, dass**:

die Motorstromversorgung ansteigende Flanken mit einer vorbestimmten Anstiegszeit umfasst, wobei die Vielzahl von Trägerfrequenzen (812, 814, 822, 824) jeweilige Frequenzen umfasst, die basierend auf dem Kehrwert der Anstiegszeit ausgewählt werden; und/oder

die Motorstromversorgung abfallende Flanken mit einer vorbestimmten Abfallzeit umfasst, wobei die Vielzahl von Trägerfrequenzen (812, 814, 822, 824) jeweilige Frequenzen umfasst, die auf der Grundlage des Kehrwerts der Abfallzeit ausgewählt werden.

14. Motoranordnung (100) nach Anspruch 13, wobei die mindestens eine Datenleitung (112) ein verdrilltes Leitungspaar umfasst.

**Revendications**

1. Procédé de transmission de données, comprenant les étapes consistant à :

fournir (902) une alimentation électrique de moteur via au moins un câble de moteur (110) à un moteur (102) ;
déterminer (904) des données de capteur liées au moteur (102) ;
déterminer (906) un signal de capteur sur la base des données de capteur en utilisant une pluralité de fréquences porteuses (812, 814, 822, 824) ; et
transmettre ou recevoir (908) le signal de capteur via au moins une ligne de données (112) prévue dans une gaine de câbles commune (108) avec ledit au moins un câble de moteur (110) ;
**caractérisé en ce que** :

l'alimentation électrique de moteur comprend des fronts montants avec un temps de montée prédéterminé, dans lequel la pluralité de fréquences porteuses (812, 814, 822, 824) comprend des fréquences respectives qui sont sélectionnées sur la base de l'inverse du temps de montée ; et/ou
l'alimentation électrique de moteur comprend des fronts descendants avec un temps de descente prédéterminé, dans lequel la pluralité de fréquences porteuses (812, 814, 822, 824) comprend des fréquences respectives qui sont sélectionnées sur la base de l'inverse du temps de descente.

2. Procédé de transmission de données selon la revendication 1,

dans lequel l'alimentation électrique de moteur comprend des fronts montants avec un temps de montée prédéterminé et/ou des fronts descendants avec un temps de descente prédéterminé ; et

dans lequel la pluralité de fréquences porteuses (812, 814, 822, 824) comprend des fréquences respectives qui sont supérieures à 10 % de l'inverse du temps de montée, ou

dans lequel la pluralité de fréquences porteuses (812, 814, 822, 824) comprend des fréquences respectives qui sont supérieures à 20 % de l'inverse du temps de montée, ou

dans lequel la pluralité de fréquences porteuses (812, 814, 822, 824) comprend des fréquences respectives qui sont supérieures à 50 % de l'inverse du temps de montée, ou

dans lequel la pluralité de fréquences porteuses (812, 814, 822, 824) comprend des fréquences respectives qui sont supérieures à l'inverse du temps de montée ; ou

dans lequel la pluralité de fréquences porteuses (812, 814, 822, 824) comprend des fréquences respectives qui sont supérieures à 10 % de l'inverse du temps de descente, ou

dans lequel la pluralité de fréquences porteuses (812, 814, 822, 824) comprend des fréquences respectives qui sont supérieures à 20 % de l'inverse du temps de descente, ou

dans lequel la pluralité de fréquences porteuses (812, 814, 822, 824) comprend des fréquences respectives qui sont supérieures à 50 % de l'inverse du temps de descente, ou

dans lequel la pluralité de fréquences porteuses (812, 814, 822, 824) comprend des fréquences respectives qui sont supérieures à l'inverse du temps de descente.

3. Procédé de transmission de données selon au moins l'une des revendications 1 à 2, dans lequel la pluralité de fréquences porteuses (812, 814, 822, 824) comprend des fréquences respectives d'au moins 10 MHz.

4. Procédé de transmission de données selon au moins l'une des revendications 1 à 3, dans lequel le signal de capteur comprend un débit de transmission de données d'au moins 40 MBaud.

5. Procédé de transmission de données selon au moins l'une des revendications 1 à 4, dans lequel ladite au moins une ligne de données (112) fournit des caractéristiques de filtre passe-haut.

6. Procédé de transmission de données selon au moins l'une des revendications 1 à 5, dans lequel le signal de capteur est déterminé sur la base d'un multiplexage par répartition en fréquences orthogonales.

7. Procédé de transmission de données selon au moins l'une des revendications 1 à 6,

dans lequel le signal de capteur est déterminé en utilisant un schéma de correction d'erreur.

8. Procédé de transmission de données selon la revendication 7, dans lequel le schéma de correction d'erreur comprend un codage de Golay.

9. Procédé de transmission de données selon au moins l'une des revendications 1 à 8,

dans lequel les données de capteur comprennent une pluralité de bits ; et
dans lequel déterminer le signal de capteur comprend les étapes consistant à :

regrouper un nombre prédéterminé de la pluralité de bits dans un bloc de codage ;
déterminer au moins un bit de correction d'erreur sur la base du bloc de codage ;
ajouter ledit au moins un bit de correction d'erreur au bloc de codage ; et
coder le bloc de codage en utilisant la pluralité de fréquences porteuses (812, 814, 822, 824).

10. Procédé de transmission de données selon au moins l'une des revendications 1 à 9, comprenant en outre l'étape consistant à :
transmettre une puissance en courant continu via ladite au moins une ligne de données (112).

11. Procédé de transmission de données selon au moins l'une des revendications 1 à 9, dans lequel au moins une fréquence porteuse de la pluralité de fréquences porteuses (812, 814, 822, 824) est déterminée sur la base d'une minimisation d'une force de signal totale de la pluralité de fréquences porteuses (812, 814, 822, 824).

12. Procédé de transmission de données selon la revendication 11, dans lequel ladite au moins une fréquence porteuse de la pluralité de fréquences porteuses (812, 814, 822, 824) ne représente pas les données de capteur.

13. Agencement de moteur (100), comprenant :

un moteur (102) ;
un capteur (104) configuré pour déterminer des données de capteur liées au moteur (102) ;
un câble (108) comprenant au moins un câble de moteur (110) et au moins une ligne de données (112) dans une gaine de câbles commune ; et
un dispositif de commande (106) connecté via le câble (108) au moteur (102) et au capteur (104), le dispositif de commande (106) étant configuré pour transmettre une alimentation électrique de moteur au moteur (102) via ledit au moins un câble de moteur (110) et pour transmettre ou recevoir un signal de capteur vers ou depuis le capteur (104) via ladite au moins une ligne de données (112) ;

dans lequel le signal de capteur comprend une pluralité de fréquences porteuses (812, 814, 822, 824) ;

**caractérisé en ce que** :

l'alimentation électrique de moteur comprend des fronts montants avec un temps de montée prédéterminé, dans lequel la pluralité de fréquences porteuses (812, 814, 822, 824) comprend des fréquences respectives qui sont sélectionnées sur la base de l'inverse du temps de montée ; et/ou l'alimentation électrique de moteur comprend des fronts descendants avec un temps de descente prédéterminé, dans lequel la pluralité de fréquences porteuses (812, 814, 822, 824) comprend des fréquences respectives qui sont sélectionnées sur la base de l'inverse du temps de descente.

14. Agencement de moteur (100) selon la revendication 13, dans lequel ladite au moins une ligne de données (112) comprend une paire de lignes torsadées.

100

Fig. 1

<u>200</u>

Fig. 2

Fig. 3

Fig. 4

500

Fig. 5

600

Fig. 6

Fig. 7

Fig. 8

900

| | |
|---|---|
| Provide a motor power supply via at least one first line to a motor | 902 |

| | |
|---|---|
| Determine sensor data related to the motor | 904 |

| | |
|---|---|
| Determine a sensor signal based on the sensor data using a plurality of carrier frequencies | 906 |

| | |
|---|---|
| Transmit or receive the sensor signal via at least one second line provided in a common cable jacket with the at least one first line | 908 |

Fig. 9

**EP 3 910 801 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016251956 A1
- US 10454267 B1
- US 2017194784 A1
- US 2002043964 A1
- JP 2012178758 A
- US 10304590 B2